# EUROPEAN PATENT APPLICATION

(11) **EP 4 813 832 A1**
(43) Date of publication of application: **30.09.2026**
(21) Application number: 25165519.7
(22) Date of filing: 24.03.2025
(51) Int. Cl.: B64C 1/06

(54) **A SLIDING-DRAWER FUSELAGE CONSTRUCTION FOR AN AIRCRAFT**

(71) Applicant: AIRBUS Operations GmbH, 21129 Hamburg (DE)
(72) Inventor: Benthien, Hermann, 21129 Hamburg (DE); Grunenberg, Jan, 21129 Hamburg (DE)
(74) Representative: Airbus Germany

(57) **Abstract**

The present invention relates to an aircraft fuselage construction (14) featuring a detachable fuselage part (32) designed to facilitate access to an accommodation space (34) for installing and removing liquid hydrogen (LH2) tanks (36) or other equipment. The fuselage construction (14) includes a fuselage section (27). A fuselage opening (38) is provided in the fuselage section (27), enabling the installation of the detachable fuselage part (32) via a mounting arrangement (40). The mounting arrangement (40) includes a bearing support system (44) allowing linear movement along the longitudinal axis of the aircraft (10) and a locking system (48) securing the detachable fuselage part (32) in place. The detachable fuselage part (32) is designed to maintain structural integrity and aerodynamic continuity when installed while providing easy removal for maintenance or equipment replacement. The invention ensures efficient handling of large tanks or equipment, optimizing operational efficiency and reducing aircraft modification complexity.

## Description

The invention relates to a fuselage construction for an aircraft and to a detachable fuselage part. The invention further relates to associated apparatus and methods.

EP 2 902 229 B1 discloses a door construction for an aircraft with a door and a door frame, wherein an inflatable tube is inflated to at least partially seal the gap between the door and the door frame upon pressurizing the inside of the aircraft.

US 2022 / 0 170 492 A1 discloses a fastening system with a bushing, a ball lock pin, and a plastically deformable funnel element. The bushing is attached to a structural part of an aircraft. The bushing has a base portion that is plugged through a structural opening of the structural part. The funnel element has a funnel opening. The ball lock pin is introduced through the funnel opening into a receiving opening of the base portion and fastened therein. The ball lock pin has a collar which faces away from the receiving opening and which is larger than the funnel opening. The funnel element is designed to be deformed from its basic shape into a flat, disk-like final shape by the collar of the ball lock pin during fastening.

EP 3 931 656 B1 discloses an unmanned ground-based transport vehicle (UGV) having a base plate and at least one housing side wall that is substantially perpendicular to the base plate. Arranged in the housing is at least one wheel drive, which is coupled to at least one wheel. The wheel is arranged in a recess in the base plate. The UGV further includes a plurality of sensors for sensing the environment of the UGV, and a controller for autonomous location and navigation of the UGV on the basis of sensing parameters of the plurality of sensors. The UGV includes at least one load-receiving element that is coupled to the housing side wall and extends outwards from the housing side wall, wherein the load-receiving element comprises a load support surface for supporting an item with respect to a vertical direction which extends transverse to the base plate. The UGV is adapted to exchange data with other UGVs for transporting, in a cooperative manner, a common payload.

EP 4 194 990 A1 discloses a UGV having a base plate and at least one housing side wall that is substantially perpendicular to the base plate. Arranged in the housing is at least one wheel drive, which is coupled to at least one wheel. The wheel is arranged in a recess in the base plate. The UGV further includes a plurality of sensors for sensing the environment of the UGV, and a controller for autonomous location and navigation of the UGV on the basis of sensing parameters of the plurality of sensors. The UGV includes at least one load-receiving element that is coupled to the housing side wall and extends outwards from the housing side wall, wherein the load-receiving element comprises a load support surface for supporting an item with respect to a vertical direction which extends transverse to the base plate.

It is the object of the invention to improve fuselage constructions of aircraft. The object is achieved by the subject-matter of the independent claims. Preferred embodiments are subject-matter of the dependent claims.

The invention provides a fuselage construction for an aircraft, the fuselage construction comprising a fuselage section and a detachable fuselage part, the fuselage section and the detachable fuselage part being configured to cooperatively form a fuselage of the aircraft, when the detachable fuselage part is installed on the fuselage section,
wherein the fuselage section includes a support structure, a first aerodynamic skin that is supported by the support structure, a fuselage opening, and a mounting arrangement,
wherein the detachable fuselage part includes a second aerodynamic skin and an installation arrangement,
wherein the mounting arrangement and the installation arrangement are configured such that the detachable fuselage part is movable relative to the fuselage section from a detached position, in which the detachable fuselage part is detached from the fuselage section, along a mounting direction in a linear manner and into an installation position, in which the detachable fuselage part is supported by the fuselage section,
wherein the mounting arrangement and the installation arrangement are further configured to be able to lock the detachable fuselage part and the fuselage section together, when they are in the installation position.

Preferably, the mounting arrangement and the installation arrangement are configured such that after locking the detachable fuselage part is mounted to the fuselage section in a manner that forms a load-transferring coupling therebetween.

Preferably, the mounting arrangement and the installation arrangement are configured such that during movement of the detachable fuselage part from the detached position into the installation position the fuselage section engages and supports the detachable fuselage part so as to keep the shape of the detachable fuselage part.

Preferably, the mounting arrangement comprises a bearing support arrangement that is arranged on a bottom rim of the fuselage opening and that is configured for engaging the detachable fuselage part to allow its linear movement along a longitudinal direction of the fuselage section.

Preferably, the installation arrangement comprises a second bearing support arrangement that is disposed on a top rim of the detachable fuselage part and that is configured for engaging the fuselage section to allow linear movement of the detachable fuselage part along a longitudinal direction of the fuselage section.

Preferably, the mounting arrangement and/or the installation arrangement comprise a plurality of locking members that, when in an unlocked state, allow detaching the detachable fuselage part, and, when in a locked state, form a positive connection with the fuselage section to enable a load carrying reinforcement.

Preferably, the fuselage construction further comprises a sealing arrangement that is arranged and configured for providing a seal between the detachable fuselage part and the fuselage section.

Preferably, the sealing arrangement comprises a sealing member that is configured to be inflated by a pressure difference between the accommodation space and the outside of the fuselage construction.

The invention provides a detachable fuselage part configured for a fuselage construction of any of the preceding claims, wherein the detachable fuselage part comprises an aerodynamic skin and an installation arrangement, that is configured such that the detachable fuselage part is movable relative to a fuselage section from a detached position, in which the detachable fuselage part is detached from the fuselage section, along a mounting direction, preferably along a longitudinal direction as defined by the fuselage section, in a linear manner and into an installation position, in which the detachable fuselage part is supported by the fuselage section.

Preferably, the installation arrangement includes a bearing support arrangement and a plurality of locking elements, wherein the bearing support arrangement is configured to allow linear movement of the detachable fuselage part along the longitudinal direction as defined by the fuselage section, wherein the locking elements are configured to positively lock the detachable fuselage part to the fuselage section to enable a load carrying reinforcement.

The invention provides a fuselage of an aircraft, preferably an airplane, comprising a preferred fuselage construction, wherein the detachable fuselage part is locked to the fuselage section.

The invention provides an aircraft, preferably an airplane, comprising a preferred fuselage.

The invention provides a fuselage installation kit-of-parts comprising a preferred fuselage or a preferred aircraft, and further comprising a carrier that is configured for moving and lifting the detachable fuselage part and/or configured for switching the locking members and/or the locking elements between their locked and unlocked states.

The invention provides a method for attaching a detachable fuselage part in a preferred fuselage construction, the method comprising:
a) providing the fuselage section and the detachable fuselage part, wherein the detachable fuselage part is supported by a carrier;
b) moving the detachable fuselage part with the carrier to engage the fuselage section for support, and further moving the detachable fuselage part along the longitudinal direction as defined by the fuselage section until the mounting arrangement and the installation arrangement are able to lock; and
c) locking the detachable fuselage part to the fuselage section.

The invention provides a method for detaching a detachable fuselage part in a preferred fuselage construction, the method comprising:
a) supporting the detachable fuselage part with a carrier;
b) unlocking the detachable fuselage part from the fuselage section; and
c) moving the detachable fuselage part with the carrier to disengage from the fuselage section along the longitudinal direction as defined by the fuselage section.

The sliding drawer configuration provides a highly efficient and accessible space beneath the aircraft tail, designed to facilitate the loading and unloading of bulky equipment, such as liquid hydrogen (LH2) tanks. This system allows that even large and heavy components can be easily maneuvered in and out of the aircraft, optimizing operational efficiency while maintaining structural integrity and safety.

The forward interface of the sliding drawer system is designed to be rigid and stiff, enabling that the drawer element maintains its structural shape even under heavy loads. This stiffness is important for the reliability, as it can prevent deformation or misalignment during operation. The forward circular tube section of the system is engineered to include a form-fitting connection. This feature allows for smooth and effortless installation and removal of the sliding drawer, which can reduce downtime and improve ease of maintenance.

Inside the conical section of the sliding drawer system, a specialized positive connection is used to enable a form-fit bending connection. This connection technique allows a secure and stable attachment, preventing unwanted movement or instability during operation. The form-fit nature of this connection means that the system components can naturally align and interlock, enhancing the overall strength and durability of the assembly. Additionally, this idea enables the system to withstand high mechanical stresses while maintaining its operational efficiency.

Another advantage of the sliding drawer system is its rapid installation process. The envisaged design allows for faster assembly and disassembly, enabling quicker loading and unloading of system components. This feature is particularly beneficial for applications requiring frequent replacement or maintenance of heavy equipment, such as LH2 tanks. By using a complete form-fit during installation, the system can avoid the risk of misalignment, reduce operational errors and enhance overall safety.

Another innovation in this configuration is the ability of system components, such as LH2 tanks, to be removed from the aircraft when necessary. By allowing these components to exit the aircraft, the overall interface between the aircraft and the sliding drawer system can be minimized. This feature reduces mechanical complexity and potential points of failure, leading to improved reliability and ease of maintenance. Furthermore, the ability to separate system components provides enhanced flexibility in operations, allowing for modular upgrades or replacements without extensive modifications to the aircraft.

The sliding drawer system is not only a mechanism for equipment enclosure but may also form a structural reinforcement component of the fuselage. The design incorporates a form-fit load-carrying reinforcement that can distribute weight and mechanical forces efficiently. This capability allows that the aircraft structure can remain stable and secure even when handling heavy loads. The integration of load-bearing features into the sliding mechanism further enhances its practicality, making it an ideal component for applications requiring both mobility and structural support.

To improve the protection of equipment and maintain environmental integrity, a passive sealing system can be incorporated into the sliding drawer mechanism. This sealing system can prevent contaminants such as dust, moisture, and debris from entering the accommodation space, thereby safeguarding the equipment, e.g. LH2 tanks. By implementing a passive sealing system, the design can enhance the longevity and reliability of the stored components, reducing the risk of damage or performance degradation over time.

The sliding drawer configuration is a highly effective solution for enhancing accessibility and efficiency in aircraft operations. By providing a rigid and structurally sound interface, enabling easy installation and removal, incorporating form-fit connections, and integrating load-carrying reinforcement, this system ensures optimal performance. Additionally, the ability to remove system capsules reduces the aircraft interface, improving modularity and ease of maintenance. The inclusion of a passive sealing system further enhances the protection of stored equipment, making this configuration an ideal choice for applications requiring secure, efficient, and adaptable storage solutions.

Embodiments of the invention are described in more detail with reference to the accompanying schematic drawings that are listed below
- Fig. 1: depicts an embodiment of an aircraft;
- Fig. 2: depicts a longitudinal cross-section of the aircraft of Fig. 1;
- Fig. 3: depicts an embodiment of a locking member in an unlocked state;
- Fig. 4: the locking member in a locked state; and
- Fig. 5 to Fig. 7: depict a method for removing/installing aircraft components.

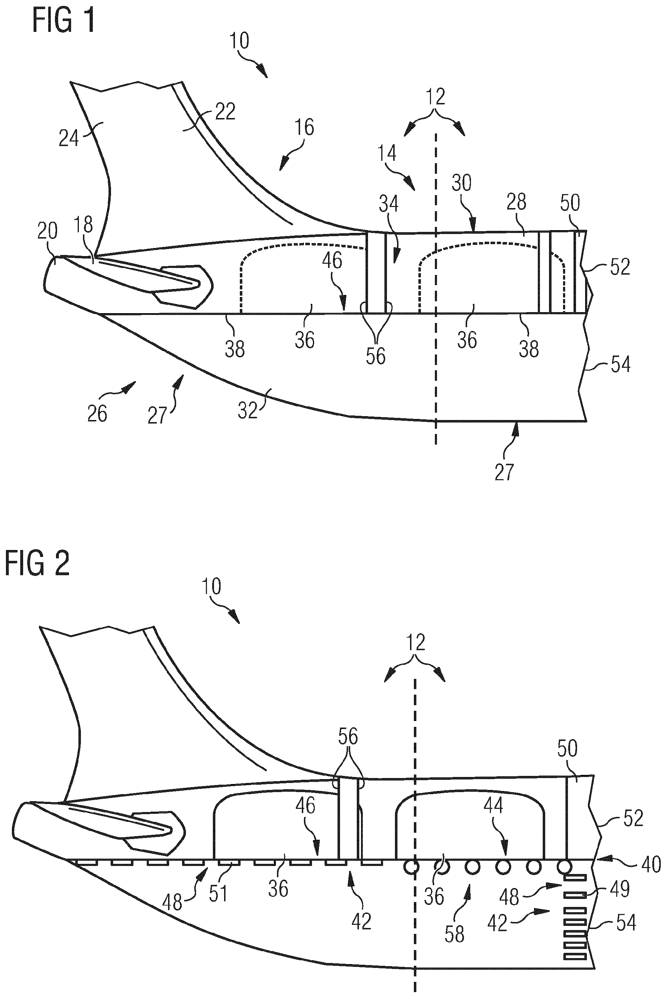

Referring to Fig. 1 and Fig. 2 an embodiment of an aircraft 10 is depicted. The aircraft 10 comprises a fuselage 12 that includes a fuselage construction 14. The fuselage 12 has a tailplane section 16. The tailplane section 16 includes multiple functional surfaces, namely a horizontal stabilizer 18, an elevator 20, a vertical stabilizer 22, and a rudder 24 in a manner known in the art.

Furthermore, the tailplane section 16 has a tail fuselage section 26, which is an example for a fuselage section 27. The tail fuselage section 26 supports the horizontal and vertical stabilizers 18, 22 which in turn support the control surfaces, namely the elevator 20 and the rudder 24, respectively. The tail fuselage section 26 comprises an aerodynamic skin 28 that forms an aerodynamic surface. The tail fuselage section 26 has a general conical, tapered shape that tapers towards the aft direction. In other words, looking at a longitudinally progressing sequence of lateral cross-sections through the tail fuselage section 26 (i.e., without the functional surfaces), the outer circumference of each cross-section, e.g., measured along the aerodynamic skin 28, decreases monotonically towards the aft. The cross-section generally has a circular or ellipsoidal shape.

The fuselage 12 further includes a main fuselage section 30, which is an example of a fuselage section 27. The main fuselage section 30 generally forms the main body of the aircraft 10. The main fuselage section 30 comprises the aerodynamic skin 28. The main fuselage section 30 has a general cylinder-like shape of only slightly varying diameter. In other words, looking at a longitudinally progressing sequence of lateral cross-sections through the main fuselage section 30 (i.e. ignoring details, such as windows, doors, etc.), the outer circumference of each cross-section, e.g. measured along the aerodynamic skin 28, is about the same within a 5% to 10 % tolerance band. The cross-section generally has a circular or ellipsoidal shape.

The fuselage construction 14 includes the tail and main fuselage sections 26, 30 (collectively named fuselage section 27) and a detachable fuselage part 32.

The fuselage section 27 comprises a support structure 33 that supports the aerodynamic skin 28. The support structure 33 includes structural members like frames and stringers.

The detachable fuselage part 32 and the fuselage section 27 provide an accommodation space 34, e.g., for installing multiple liquid hydrogen (LH2) tanks 36. It should be noted however, that the accommodation space 34 can be adapted to accommodate any other piece of equipment that may be semi-permanently installed on the aircraft 10, e.g., tanks involved in fire extinguishing or ground radar electronics and other surveying devices. The description will focus on the LH2 tank 36 application for sake of brevity and illustration.

The fuselage construction 14 includes a fuselage opening 38 that is formed in the fuselage section 27 to allow access to the accommodation space 34. The fuselage opening 38 is formed at the tail fuselage section 26 and the main fuselage section 30.

The fuselage section 27 comprises a mounting arrangement 40 that is configured to mount the detachable fuselage part 32 to the fuselage section 27. The detachable fuselage part 32 comprises an installation arrangement 42 that is configured to interact with the mounting arrangement 40 to cooperatively secure the detachable fuselage part 32 to the fuselage section 27.

The mounting arrangement 40 comprises a bearing support arrangement 44. The bearing support arrangement 44 is disposed at the bottom rim 46 of the fuselage opening 38. The bearing support arrangement 44 is disposed on the main fuselage section 30 as this allows a linear arrangement. The bearing support arrangement 44 allows linear movement of the detachable fuselage part 32 along the longitudinal direction as defined by the fuselage section 27. The bearing support arrangement 42 is configured to support the detachable fuselage part 32. The bearing support arrangement 44 may be formed as linear races for roller members or may include a plurality of linearly arranged roller members.

The mounting arrangement 40 comprises a plurality of locking members 48. The locking members 48 are preferably arranged in two groups. A first group 49 is arranged on a first frame 50 of the main fuselage section 30. The first frame 50 has a top half 52 and a bottom half 54. The top half 52 supports the aerodynamic skin 28. The bottom half 54 also supports the aerodynamic skin 28 and is exposed towards aft within the fuselage opening 38.

A second group 51 is arranged on a plurality of second frames 56. The second frames 56 are disposed on the tail fuselage section 26 and support its respective aerodynamic skin 28. The second frames 56 are configured as half-frames that extend in an arc shape from one side of the fuselage opening 38 to the other side in a lateral direction. Each second frame 56 includes locking members 48 on each of its end portions. The second group 51 of locking members 48 is thus distributed along the longitudinal direction with a distance determined by the distance between neighboring second frames 56.

The installation arrangement 42 comprises a second bearing support arrangement 58. The second bearing support arrangement 58 is disposed at the top rim 60 of the detachable fuselage part 32. The second bearing support arrangement 58 is disposed on portion of the detachable fuselage part 32 that is configured to match and mount to the main fuselage section 30. The second bearing support arrangement 58 allows linear movement of the detachable fuselage part 32 along the longitudinal direction as defined by the fuselage section 27. The second bearing support arrangement 58 is formed complementary to the bearing support arrangement 44. The second bearing support arrangement 58 may include a linearly arranged plurality of roller members or may include a linear race for the roller members. The installation arrangement 42 comprises a plurality of locking elements 60. The locking elements 60 are preferably arranged in two groups to match the arrangement of the locking members 48.

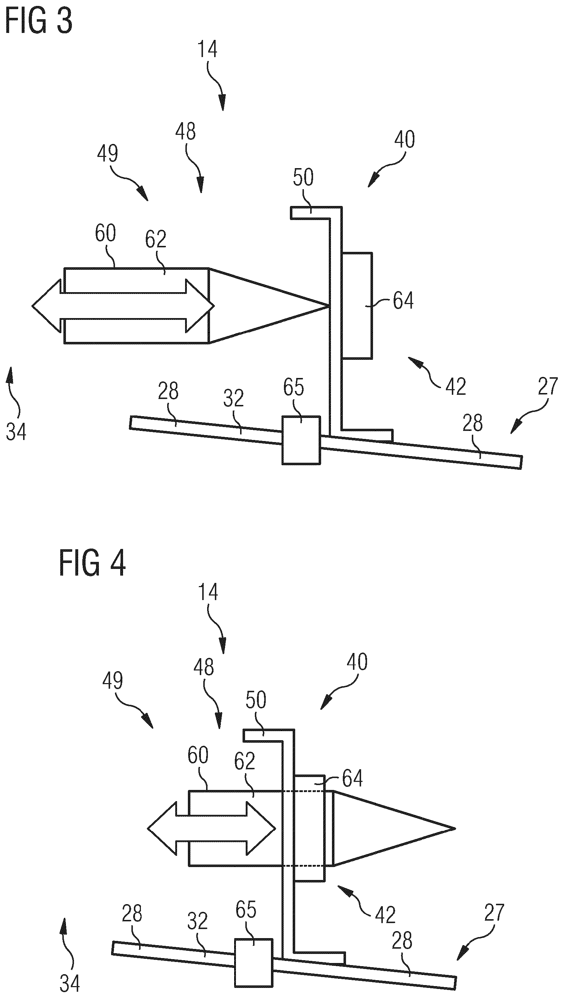

Referring to Fig. 3 and Fig. 4, the operation of the locking members 48 and the locking elements 60 are described in more detail.

Fig. 3 depicts a schematic top-down view of the unlocked state. The first frame 50 supports the aerodynamic skin 28 and the locking member 48. The locking element 60 includes a ball lock pin 62 and a bushing 64. The bushing 64 is formed on the detachable fuselage part 32. Furthermore, the fuselage construction 14 includes a sealing arrangement 65 that is arranged between the detachable fuselage part 32 and the fuselage section 27 to seal a possible remaining gap with a sealing member. The configuration of the sealing arrangement 65 may be configured according to EP 2 902 229 A1, where the door frame and the door are replaced by the aerodynamic skin 28 and the detachable fuselage part 32, where optionally the sealing member is open towards the accommodation space 34.

Fig. 4 depicts the locked state. The ball lock pin 62 is pushed through the locking member 48 and into the bushing 64 to mount the detachable fuselage part 32 in a formfitting manner. The ball lock pin 62 is held securely by a plurality of balls, as described in more detail in US 2022 / 0 170 492 A.

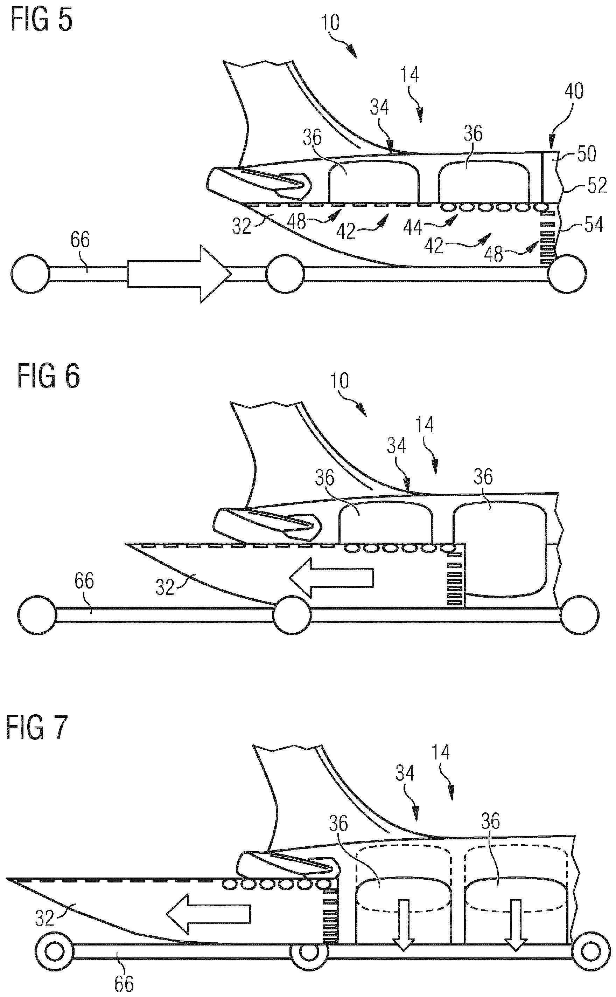

Referring to Fig. 5 through Fig. 7, a method for dismounting the detachable fuselage part 32 is described.

A carrier 66 is moved below the tailplane section 16. The carrier 66 is configured to engage the detachable fuselage part 32 and partially support it. The locking elements 60 are unlocked from the locking members 48. This can be done manually or in an automated manner, e.g., using hydraulics. In this state, the detachable fuselage part 32 is still supported by the bearing support arrangements 44, 58 in a manner that maintains the shape of the detachable fuselage part 32.

After unlocking, the detachable fuselage part 32 is moved linearly aftward. During movement the detachable fuselage part 32 is supported by the bearing arrangements 44, 58. As a result of the movement, the fuselage opening 38 gets uncovered and the accommodation space 34 becomes accessible from the outside. The movement can be performed by a conveyor mechanism, which is generally known, of the carrier 66. It should be noted that after the detachable fuselage part 32 is completely disengaged from the fuselage section 27, specifically from the bearing support arrangement 44, the detachable fuselage part 32 may deform under its own weight.

Lastly, the LH2 tanks 36 get unmounted and lowered onto the carrier 66 by a lifting mechanism, e.g., some sort of crane that is generally known.

Installation of the LH2 tanks 36 in the accommodation space 34 is done by reversing the order of the steps, i.e., lifting the LH2 tanks 36 into the accommodation space 34 and mounting them, engaging the detachable fuselage part 32 with the bearing support arrangement 44, which causes the detachable fuselage part 32 to achieve its desired shape, sliding the detachable fuselage part 32 forward until the locking members 48 and the locking elements 60 are adjacent to each other, and locking the locking elements 60 to the locking members 48, e.g., by inserting the ball lock pin 62 through the locking members 48 into the bushing 64.

The present invention relates to an aircraft fuselage construction (14) featuring a detachable fuselage part (32) designed to facilitate access to an accommodation space (34) for installing and removing liquid hydrogen (LH2) tanks (36) or other equipment. The fuselage construction (14) includes a fuselage section (27). A fuselage opening (38) is provided in the fuselage section (27), enabling the installation of the detachable fuselage part (32) via a mounting arrangement (40). The mounting arrangement (40) includes a bearing support system (44) allowing linear movement along the longitudinal axis of the aircraft (10) and a locking system (48) securing the detachable fuselage part (32) in place. The detachable fuselage part (32) is designed to maintain structural integrity and aerodynamic continuity when installed while providing easy removal for maintenance or equipment replacement. The invention ensures efficient handling of large tanks or equipment, optimizing operational efficiency and reducing aircraft modification complexity.

### List of reference signs:

- 10: aircraft
- 12: fuselage
- 14: fuselage construction
- 16: tailplane section
- 18: horizontal stabilizer
- 20: elevator
- 22: vertical stabilizer
- 24: rudder
- 26: tail fuselage section
- 27: fuselage section
- 28: aerodynamic skin
- 30: main fuselage section
- 32: detachable fuselage part
- 33: support structure
- 34: accommodation space
- 36: liquid hydrogen (LH2) tank
- 38: fuselage opening
- 40: mounting arrangement
- 42: installation arrangement
- 44: bearing support arrangement
- 46: bottom rim
- 48: locking member
- 49: first group
- 50: first frame
- 51: second group
- 52: top half
- 54: bottom half
- 56: second frame
- 58: second bearing support arrangement
- 60: locking elements
- 62: ball lock pin
- 64: bushing
- 65: sealing arrangement
- 66: carrier

## Claims

1. A fuselage construction (14) for an aircraft (10), the fuselage construction (14) comprising a fuselage section (27) and a detachable fuselage part (32), the fuselage section (27) and the detachable fuselage part (32) being configured to cooperatively form a fuselage (12) of the aircraft (10), when the detachable fuselage part (32) is installed on the fuselage section,
wherein the fuselage section (27) includes a support structure (33), a first aerodynamic skin (28) that is supported by the support structure (33), a fuselage opening (38), and a mounting arrangement (40),
wherein the detachable fuselage part (32) includes a second aerodynamic skin (28) and an installation arrangement (42),
wherein the mounting arrangement (40) and the installation arrangement (42) are configured such that the detachable fuselage part (32) is movable relative to the fuselage section (27) from a detached position, in which the detachable fuselage part (32) is detached from the fuselage section (27), along a mounting direction in a linear manner and into an installation position, in which the detachable fuselage part (32) is supported by the fuselage section (27),
wherein the mounting arrangement (40) and the installation arrangement (42) are further configured to be able to lock the detachable fuselage part (32) and the fuselage section (27) together, when they are in the installation position.

2. The fuselage construction (14) of claim 1, wherein the mounting arrangement (40) and the installation arrangement (42) are configured such that after locking the detachable fuselage part (32) is mounted to the fuselage section (27) in a manner that forms a load-transferring coupling therebetween.

3. The fuselage construction (14) of any of the preceding claims, wherein the mounting arrangement (40) and the installation arrangement (42) are configured such that during movement of the detachable fuselage part (32) from the detached position into the installation position the fuselage section (27) engages and supports the detachable fuselage part (32) so as to keep the shape of the detachable fuselage part (32).

4. The fuselage construction (14) of any of the preceding claims, wherein the mounting arrangement (40) comprises a bearing support arrangement (44) that is arranged on a bottom rim (46) of the fuselage opening (38) and that is configured for engaging the detachable fuselage part (32) to allow its linear movement along a longitudinal direction of the fuselage section (27).

5. The fuselage construction (14) of any of the preceding claims, wherein the installation arrangement (42) comprises a second bearing support arrangement (58) that is disposed on a top rim (60) of the detachable fuselage part (32) and that is configured for engaging the fuselage section (27) to allow linear movement of the detachable fuselage part (32) along a longitudinal direction of the fuselage section (27).

6. The fuselage construction (14) of any of the preceding claims, wherein the mounting arrangement (40) and/or the installation arrangement (42) comprise a plurality of locking members (48) that, when in an unlocked state, allow detaching the detachable fuselage part (32), and, when in a locked state, form a positive connection with the fuselage section (27) to enable a load carrying reinforcement.

7. The fuselage construction (14) of any of the preceding claims, further comprising a sealing arrangement (65) that is arranged and configured for providing a seal between the detachable fuselage part (32) and the fuselage section (27).

8. The fuselage construction (14) of claim 7, wherein the sealing arrangement (65) comprises a sealing member that is configured to be inflated by a pressure difference between the accommodation space (34) and the outside of the fuselage construction (14).

9. A detachable fuselage part (32) configured for a fuselage construction (14) of any of the preceding claims, wherein the detachable fuselage part (32) comprises an aerodynamic skin (28) and an installation arrangement (42), that is configured such that the detachable fuselage part (32) is movable relative to a fuselage section (27) from a detached position, in which the detachable fuselage part (32) is detached from the fuselage section (27), along a mounting direction, preferably along a longitudinal direction as defined by the fuselage section (27), in a linear manner and into an installation position, in which the detachable fuselage part (32) is supported by the fuselage section (27).

10. The detachable fuselage part (32) of claim 9, wherein the installation arrangement (42) includes a bearing support arrangement (58) and a plurality of locking elements (60), wherein the bearing support arrangement (58) is configured to allow linear movement of the detachable fuselage part (32) along the longitudinal direction as defined by the fuselage section (27), wherein the locking elements (60) are configured to positively lock the detachable fuselage part (32) to the fuselage section (27) to enable a load carrying reinforcement.

11. A fuselage (12) of an aircraft (10), preferably an airplane, comprising a fuselage construction (14) of any of the claims 1 to 9, wherein the detachable fuselage part (32) is locked to the fuselage section (27).

12. An aircraft (10), preferably an airplane, comprising a fuselage of claim 12.

13. A fuselage (12) installation kit-of-parts comprising a fuselage (12) of claim 11 or an aircraft (10) of claim 12, and further comprising a carrier (66) that is configured for moving and lifting the detachable fuselage part (12) and/or configured for switching the locking members (48) and/or the locking elements (60) between their locked and unlocked states.

14. A method for attaching a detachable fuselage part (32) in a fuselage construction (14) of any of the claims 1 to 9, the method comprising:
a) providing the fuselage section (27) and the detachable fuselage part (32), wherein the detachable fuselage part (32) is supported by a carrier (66);
b) moving the detachable fuselage part (32) with the carrier (66) to engage the fuselage section (27) for support, and further moving the detachable fuselage part (32) along the longitudinal direction as defined by the fuselage section (27) until the mounting arrangement (40) and the installation arrangement (42) are able to lock; and
c) locking the detachable fuselage part (32) to the fuselage section (27).

15. A method for detaching a detachable fuselage part (32) in a fuselage construction (14) of any of the claims 1 to 9, the method comprising:
a) supporting the detachable fuselage part (32) with a carrier (66);
b) unlocking the detachable fuselage part (32) from the fuselage section (27); and
c) moving the detachable fuselage part (32) with the carrier (66) to disengage from the fuselage section (27) along the longitudinal direction as defined by the fuselage section (27).
